# EUROPEAN PATENT SPECIFICATION

(11) **EP 2 558 548 B1**
(45) Date of publication and mention of the grant of the patent: **02.11.2016**
(21) Application number: 11724742.9
(22) Date of filing: 11.04.2011
(51) Int. Cl.: A01G 7/06

(54) **BIODEGRADABLE MATERIALS FOR SOIL MULCHING BASED ON AQUEOUS MIXTURES OF POLYSACCHARIDES AND PLANT WASTE FIBERS AND METHODS FOR THEIR APPLICATION**
BIOLOGISCH ABBAUBARE MATERIALIEN FÜR BODENMULCHEN AUF DER BASIS VON WÄSSRIGEN GEMISCHEN AUS POLYSACCHARIDEN UND PFLANZENABFALLFASERN SOWIE VERFAHREN FÜR IHRE ANWENDUNG
MATÉRIAUX BIODÉGRADABLES POUR LE PAILLAGE DE SOL À BASE DE MÉLANGES AQUEUX DE POLYSACCHARIDES ET DE FIBRES DE DÉCHETS VÉGÉTAUX ET PROCÉDÉS POUR LEUR APPLICATION

(30) Priority: 13.04.2010 IT NA20100016
(43) Date of publication of application: 20.02.2013
(73) Proprietor: Malinconico, Mario, 80136 Napoli (IT)
(72) Inventor: Malinconico, Mario, 80136 Napoli (IT)
(74) Representative: Gislon, Gabriele
(86) International application number: PCT/IB2011/000789
(87) International publication number: WO 2011/128752

(56) References cited:
- US-A- 5 516 830
- US-A- 5 996 278

## Description

### BACKGROUND OF THE INVENTION

Intensive plant production via the process of soil mulching has been known for a long time. In the past mulching was performed by covering the soil with loose organic material, such as straw, wood chips, walnut and hazelnut shells, pine cones or other plant products. The limit of these types of protection is the thick layer necessary to guarantee an effective lasting covering effect, with consequent significant modification of the soil composition over the years. Furthermore, in the event of rain or wind, these loose materials do not have characteristics of resistance such as to guarantee maintenance of the covering layer. These phenomena have led to gradual abandonment of this practice, or to its application only in minor sectors such as house plants or public parks and gardens where the use of plastic films is aesthetically unattractive. This latter technique, i.e. the use of plastic mulching films based on polyethylene or ethylene-co-vinylacetate copolymers, has gradually replaced the loose organic mulches. These films, with thickness varying from a few tenths of a micron to 50-100 microns, have all the optical, mechanical and duration characteristics necessary for application in vegetable production, in the open field or in greenhouses, and in addition the cost is usually limited, fluctuating between 1.50 and 3 euro/kg. They are also very important for reducing watering, as they are waterproof and therefore prevent evaporation. Another positive factor is their ability to keep the ground warm, as they are heat-insulating, and this effect is particularly important in winter crops. On the other hand, these films present serious disposal problems since, at the end of cultivation, they are mechanically and chemically damaged, contaminated by the chemicals used during the fruit and vegetable production and by the ground with which they have been in contact, and they are therefore either collected and piled up on the edge of the field after which they are illegally burned, or buried, or taken to authorized collection centers for disposal, against payment of a contribution by the farmer, said contribution being very expensive, up to 300 euro/ton. Said plastic films, furthermore, cannot be used for mulching established trees or for nursery gardening as they cannot be used around the stems of flowers and plants. For these reasons the application of a protective film via spray technique would be very advantageous, both for large farms equipped with industrial machines, and for small growers who normally use manual spray systems with shoulder pumps or small compressors, and for the do-it-yourself sector, i.e. the cultivation of small vegetable plots or the maintenance of small gardens or even plants grown in pots on balconies.

The closest prior art of the present application is the US Patent N° 5,996,278, which discloses a liquid fixing agent prepared by dissolving chitosan and natural polysaccharide in diluted organic acid. The obtained fixing agent is used to fix planted soil in order to prevent ornamental plants from being moved by vibration and inclination, thereby allowing thereby the safe transportation of plants without any damage.

The present invention concerns an innovative mulching method by spray application of a protective film that forms by evaporation to the air from a dispersion of the components in water, hydroalcoholic or acidic solution. The composition of the spray mixture is also innovative, as it consists of natural polymers belonging to the family of polysaccharides of terrestrial or marine plant origin, already available industrially for applications in the sectors of food additives, gels for cosmetic or dietary or pharmaceutical applications in general. Said polymers consist of polymer chains of glucopyranoside carbohydrates such as starch, pectins, guar gum, carrageenans, agar-agar, agarose, alginates or chitosan, of natural or bacterial synthesis origin, in general soluble in water or in hydroalcoholic or blandly acidic solutions. Soluble derivatives of cellulose, such as hydroxyalkylcellulose, carboxymethylcellulose or also synthetic polymers biodegradable and soluble in water, such as polyvinylalcohol or polyvinylpyrrolidone or the polyanhydrides can also be used. Preferably the polymers that can be used are obtained from agrifood production waste or waste from the fishing industry such as shellfish shells or alginic algae. In order to modulate the properties of the films obtained following evaporation of the solvent liquid, plasticizing substances are used, also biodegradable, such as glycerol and derivatives such as monoesters from citric acid, adipic acid, lactic acid, butyric acid or the polyglycerols, or in general polyalcohols soluble in water, in hydroalcoholic or acidic solutions. In order to regulate the mechanical resistance and duration of the film, short natural fibers can be added to the solution, in general of cellulosic nature, of plant or marine origin, from renewable sources, from dedicated cultivations or preferably from agroindustrial process waste, such as tomato skins and seeds, marc, olive oil pressing residue, citrus fruit peel and pips, waste from wheat, corn, rice, algae and in general particulate or fibrous waste having dimensions such as to be sprayed with a solvent. Appropriately, the fibers will have a longitudinal dimension of less than 5 mm and a section less than 0.5 mm, while the particulates will have a diameter of less than one millimeter, said dimensions being compatible with the typical spray application systems, and therefore not binding if a spray system is used provided with improved solution delivery capacity. Coloring agents able to increase the photoselective capacity of the film applied, fungicides, weedkillers, fertilisers, and anything else able to aid protection of the crops or improve plant growth can be added to the solution. Among the coloring agents that can be used, it is useful to cite the polyphenolic-based coloring agents, deriving from agroindustrial processing waste such as marc, tomatoes, olives and lignins. Among the fertilisers, it is useful to cite those based on humic acids deriving from the microbiological treatment of waste organic biomasses, or from extraction from natural sources. In order to permit correct formation of the film, the agricultural land to be mulched must be appropriately prepared, i.e. rolled or in any case leveled and smoothed. Once the spray solution has been applied on the surface to be protected, in the space of a few hours it turns into a film that adheres to the soil. At this point, and according to the type of cultivation planned, said film begins to perform its mulching function. If the agricultural practice involves cultivation from seed, a hole can be easily made in the film and the seed planted, after which the hole is re-covered with the soil. If the agricultural practice involves transplanting young plants, again a hole of suitable dimensions can be easily made in the film for the transplanting operation. For mulching trees (vines, olives, fruit trees or flowering trees, etc.) the solution is sprayed directly on the soil where the plant to be protected is growing and around it for the desired extent.

The equipment necessary for the spray application is normally available on modem farms. They are in general airless systems, generally used for distribution on the soil or on the plants of fungicides, pesticides or other substances soluble or emulsified in water. The fibrous nature of the additives used in the present invention requires a certain delivery power, which can be obtained with compressed air generated by compressors, also available on farms, the power of which varies and allows treatment of small surfaces, in the order of a few square meters, or large surfaces, in the order of hundreds of square meters. In the latter case, delivery systems are available on the market mounted on agricultural machines and powered by the engine of the agricultural machine itself. The nozzles through which the solution passes will have an appropriate shape, providing a conical spray, very practical for applications around a plant, or triangular spray, more effective for mulching agricultural land for the cultivation of fruit and vegetables.

The membrane that forms on the soil has a porous structure, as the fibrous component allows transpiration and therefore also the passage of irrigation water. Irrigation can therefore be conveniently performed according to modem methods, i.e. drip irrigation. The difference consists in the laying of the plastic irrigation tube on the surface of the film, once it has formed. More conveniently, the irrigation tube is positioned at a depth of approximately 5 cm (sub-irrigation), it is then covered and the spray solution is applied on the surface.

The solution to be applied contains cellulose in an aqueous suspension, acidulated water or hydroalcoholic solution, in a concentration of between 10 and 60%, in order to obtain a dry residue that contains cellulose between 2 and 40%, more advantageously 30%. The cellulose used comes from various sources, including the waste from many agroindustrial processes such as tomatoes, hemp, kenaf, flax, broom, citrus fruits, vines, olives, and in general fibrous waste of various types, including cellulose from paper, or from the composting thereof.

The resin to be used belongs to the β-1.4-glucan type polysaccharides. These polysaccharides have the characteristic of being soluble in water, in water acidulated with acetic acid, lactic acid, or other organic acids miscible with water between 1 and 5%, in water and alcohols like ethyl alcohol or superior, in any case miscible with water and at concentrations of between 1 and 20%. Typical polysaccharides are those of bacterial, plant or marine origin, or also derivatives of cellulose soluble in water or aqueous solvents, such as carboxymethylcellulose, hydroxyethylcellulose, methylcellulose. The plant polysaccharides are of the guar gum, arabinose, mannan or pectin type. The marine polysaccharides are of the alginate, carrageenan or chitosan type. These polymers are in general soluble when hot whereas when cold they tend to form gel either for physical reasons (entanglements) or due to their ability to capture bivalent ions from the surface with which they come into contact, for example capture of calcium ions from the soluble salts of the calcium present in the ground, as in the case of the carrageenans or the alginates. In the case of the chitosan, the gelation occurs by evaporation of the acid component dissolved in the water. Other components useful for formation of the film and giving it elastic properties are the polyols, such as glycerol and its derivatives, or polyvinylalcohol. Other components that can be added to the mixture are pigments, mineral fillers, fertilisers, weedkillers or fungicides, and in general additives able to perform functions additional to protection against weeds and water loss, which remain the main functions of the spray film subject of the present invention. All the components of the mixture must also necessarily respond to the requirements of degradability and compostability, since it is envisaged that they will remain in the ground at the end of use. The duration of the film can be modulated according to the ratio between its components or the choice of the polysaccharide. In general, high fiber contents prolong its life whereas high soluble resin contents produce shorter-lasting films. The duration times range from a few days to 12 months. Once its function on the surface is exhausted, the film is ploughed into the ground and the resinous part rapidly decays, whereas the fibrous part requires longer, up to one year.

The present invention and the correlated technology offer the following advantages with respect to the conventional systems used so far:
- Energy saving as the process is based on natural polysaccharides and plant fibers from the recovery of selected waste from the agroindustrial and fishing industries, which often represent a cost for the sector operators. Furthermore, the materials are used as they become available in nature, without performing any mechanical-chemical operations to modify them or make them thermoplastic, for example.
- Technological saving as the materials are spray-applied on the agricultural soil, generating a film integral with the ground, and therefore less subject to damage by atmospheric events such as wind. Tearing due to trampling by animals tends to be located at the pressure point but does not spread to the rest of the film, as in the case of the plastic films currently used.
- Environmental saving, as the film is completely biodegradable and at the end of its life is assimilated into the soil becoming an amender or fertilizer thereof, unlike the traditional plastic films made of petrol-based polymers.
- Direct economic saving, since its use reduces the need for chemical weedkillers. Furthermore, compared to the traditional petrol-based plastic films, it does not have to be removed from the soil at the end of cultivation.

### DISCLOSURE OF THE INVENTION

These and other advantages are obtained from a system with an aqueous, hydroalcoholic or acidulated water base which comprises at least one polysaccharide of natural origin with β-1,4-glucan structure selected from the group consisting of alginic acid, carrageenan, chitosan, hydroxyethylcellulose and a derivative thereof, and which furthermore comprises a mixture of plant fibers or particles coming from waste and a plasticizer with polyhydroxylated structure, said system being able to form a film once it has been sprayed on the soil.

According to a preferred embodiment the plasticizer is obtained from a renewable source.

By system with aqueous, hydroalcoholic or acidulated water base we mean a liquid (solution, suspension, emulsion, dispersion etc.), aqueous or hydroalcoholic mixture, or an acid aqueous mixture, preferably having a pH of between 4 and 7.5. According to a preferred embodiment, the hydroalcoholic solution is a solution consisting of water and ethyl alcohol in a volume ratio of between 95/5 and 90/10. According to another preferred embodiment, the acidulated water is a slightly acid aqueous solution, with pH no less than 4, preferably a water/acetic acid or wine vinegar mixture comprising between 2 and 10% in volume of acetic acid, preferably between 2 and 5%.

Other solutions or aqueous dispersions, within reach of a person skilled in the art, can be prepared and used according to the present invention.

By "derivative" of the polysaccharide according to the invention, we mean a polysaccharide deriving from cellulose modified by etherification and made soluble in water.

By plasticizer we mean glycerol or polyglycerol.

According to a preferred embodiment, the polysaccharide is chosen from carrageenan, hydroxyethylcellulose and a combination thereof in a ratio of 1 to 5 and 5 to 1, dissolved in water at a total concentration of between 1 and 10%, preferably between 1.5 and 5%.

According to another preferred embodiment, the polysaccharide is chosen from alginic acid, hydroxyethylcellulose and a combination thereof in a ratio of 1 to 5 and 5 to 1, dissolved in water at a total concentration of between 1 and 10%, preferably between 1.5 and 5%.

According to a further preferred embodiment, the polysaccharide is chosen from chitosan, hydroxyethylcellulose and a combination of the two in a ratio of 1 to 5 and 5 to 1, dissolved in water/acetic acid or in wine vinegar containing between 2 and 10% acetic acid, preferably between 2 and 5%.

The use of the system according to the invention for soil mulching constitutes a further aspect of the invention.

The methods for soil mulching that use the system as described and claimed here constitute a further subject of the invention.

### DETAILED DISCLOSURE OF SOME PREFERRED EMBODIMENTS OF THE PRESENT INVENTION

The examples given below are provided for purely illustrative purposes and do not constitute a limitation to the present invention.
Example 1 - The liquid mixture consists of a solution in water at 1.5% of sodium alginate (SA) (33%) hydroxyethylcellulose (HeCell) (17%) and polyglycerol (PG) (50%). The mixture is sprayed, by means of compressor-powered airless gun, onto agricultural ground previously rolled and on which a powder mixture of ground algae, ground corn husks and ground tomato skin and seed waste, in a proportion of 33/33/33, has been distributed and in a quantity such as to constitute a continuous bed. The quantity of liquid mixture sprayed is 2 liters per square meter. After approximately 24 hours a solid film forms on the surface of the ground. At this point the film is perforated with steel cylindrical tube, obtaining regular holes in which the young plants to be transplanted are placed.
Example 2 - The liquid mixture consists of a solution in water at 1.5% of sodium alginate (SA) (33%) hydroxyethylcellulose (HeCell) (17%) and polyglycerol (PG) (50%). A powder mixture of ground algae, ground corn husks and ground tomato skin and seed waste is added to the mixture, under mechanical stirring, in a proportion of 33/33/33, and in a quantity such as to constitute 50% of the solid contents in the final film. The mixture is sprayed, by means of compressor-powered airless gun, onto previously rolled agricultural ground. The quantity of mixture sprayed is 2 liters per square meter. After approximately 24 hours a solid film forms on the surface of the ground. At this point the film is perforated with a cylindrical steel tube, obtaining regular holes in which the young plants to be transplanted are placed.
Example 3 - As in examples 1 and 2, in which the SA is replaced by the carrageenan (CA).
Example 4 - The liquid mixture consists of a solution in water/acetic acid at 3% in acetic acid and 1.5% chitosan (CH) (50 %) and polyglycerol (PG) (50%). A powder mixture of ground algae, ground corn husks and ground tomato skin and seed waste is added to the mixture, under mechanical stirring, in a proportion of 33/33/33, and in a quantity such as to constitute 50% of the solid contents in the final film. The mixture is sprayed, by means of compressor-powered airless gun, onto previously rolled agricultural ground. The quantity of mixture sprayed is 2 liters per square meter. After approximately 24 hours a solid film forms on the surface of the ground. At this point the film is perforated with a cylindrical steel tube, obtaining regular holes in which the young plants to be transplanted are placed.
Example 5 - The liquid mixture consists of a solution in wine vinegar at 5% in acetic acid and 1.5% of chitosan (CH) (50%) and polyglycerol (PG) (50%). A powder mixture of ground algae, ground corn husks and ground tomato skin and seed waste is added to the mixture, under mechanical stirring, in a proportion of 33/33/33, and in a quantity such as to constitute 50% of the solid contents in the final film. The mixture is sprayed, by means of compressor-powered airless gun, onto previously rolled agricultural ground. The quantity of mixture sprayed is 2 liters per square meter. After approximately 24 hours a solid film forms on the surface of the ground. At this point the film is perforated with a cylindrical steel tube, obtaining regular holes in which the young plants to be transplanted are placed.
Example 6 - The liquid mixture consists of a solution in water/acetic acid at 3% in acetic acid and 1.5% chitosan (CH) (50%) and polyglycerol (PG) (50%). A powder of carbon black is added to the mixture, under mechanical stirring, and in a quantity such as to constitute 3% of the solid contents in the final film. The mixture is sprayed, by means of compressor-powered airless gun, onto previously rolled agricultural ground. The quantity of mixture sprayed is 2 liters per square meter. After approximately 24 hours a solid film forms on the surface of the ground. At this point the film is perforated with a cylindrical steel tube, obtaining regular holes in which the young plants to be transplanted are placed.
Example 7 - The liquid mixture consists of a solution in water at 1.5% of sodium alginate (SA) (33%) hydroxyethylcellulose (HeCell) (17%) and glycerol (G) (50%). The mixture is sprayed, by means of compressor-powered airless gun, onto previously rolled agricultural ground on which a powder mixture of ground algae, ground corn husks and ground tomato skin and seed waste has been distributed, in a proportion of 33/33/33, and in a quantity such as to constitute a continuous bed. The quantity of liquid mixture sprayed is 2 liters per square meter. After approximately 24 hours a solid film forms on the surface of the ground. At this point the film is perforated with a cylindrical steel tube, obtaining regular holes in which the young plants to be transplanted are placed.
Example 8 - The liquid mixture consists of a solution in water/acetic acid at 3% in acetic acid and at 1.5 % of chitosan (CH) (50%) and glycerol (G) (50%). A powder of carbon black is added to the mixture, under mechanical stirring, and in a quantity such as to constitute 3% of the content of solids in the final film. The mixture is sprayed, by compressor-powered airless gun, onto previously rolled agricultural ground. The quantity of mixture sprayed is 2 liters per square meter. After approximately 24 hours a solid film forms on the surface of the ground. At this point the film is perforated with a cylindrical steel tube, obtaining regular holes in which the young plants to be transplanted are placed.
Example 9 - The liquid mixture consists of a solution in water/acetic acid at 3% in acetic acid and at 1.5 % of chitosan (CH) (50%) and polyglycerol (PG) (50%). A solution of lignin at 50% in water is added to the mixture, under mechanical stirring, and in a quantity such as to constitute 3% of the solid contents in the final film. The mixture is sprayed, by means of compressor-powered airless gun, onto previously rolled agricultural ground. The quantity of mixture sprayed is 2 liters per square meter. After approximately 24 hours a solid film forms on the surface of the ground. At this point the film is perforated with a cylindrical steel tube, obtaining regular holes in which the young plants to be transplanted are placed.
Example 10 - The liquid mixture consists of a solution in water/acetic acid at 3% in acetic acid and at 1.5 % of chitosan (CH) (50%) and polyglycerol (PG) (50%). A powder of carbon black is added to the mixture, under mechanical stirring, and in a quantity such as to constitute 3% of the content of solids in the final film, and a waste cellulose powder, from waste paper, in a quantity such as to constitute 50% of the final solid content. The mixture is sprayed, by compressor-powered airless gun, onto previously rolled agricultural ground. The quantity of mixture sprayed is 2 liters per square meter. After approximately 24 hours a solid film forms on the surface of the ground. At this point the film is perforated with a cylindrical steel tube, obtaining regular holes in which the young plants to be transplanted are placed.
Example 11 - As in Example 10, but in which the waste cellulose is replaced with pulp powder, coming from the processing and extraction of citrus fruit.
Example 12 - As in Example 11, but in which the pulp is replaced by olive powder, coming from olive pressing after extraction of the oil.
Example 13 - As in Example 12, but in which the pulp is replaced by rice husk powder, coming from the harvesting and processing of rice.
Example 14 - As in Example 13, but in which the rice husk powder is replaced by hemp processing waste (hemp stalk powder and hemp hackling residues).
Example 15 - As in example 14, but in which the hemp is replaced by ground straw.
Example 16 - As in example 15, but in which the straw is replaced by green manure, mainly *sativa,* from cruciferous, graminaceous and leguminous plants.
Example 17 - As in the previous examples, but in which the material is sprayed at the base of a tree crop, over a width of approximately 1 square meter, again after preparation of the ground to eliminate all irregularities and obtain a smooth surface. The tree crops are olives, vines, citruses, ornamental plants, and in general all types of plants that require protection against weeds.
Example 18 - As in example 16, but in which the trees are grown in containers. Example 19 - As in the examples 1 to 15, but in which pest control agents of natural or synthetic origin, permitted in cultivation, are added to the solution to be sprayed. Example 20 - As in examples 1 to 15, in which humic substances coming from composting of waste plant biomasses are added to the solution to be sprayed, in a quantity from 20 to 60% (in weight) with respect to the total weight of the dry residue.
Example 21 - As in example 20, in which the humic substances come from natural source.
Example 22 - As in Example 18, but in which the pest control agents are integrated with (or replaced by) food contact pigments that provide coloring,in order to interact with the light radiation and with the organs of sight of the insects, and therefore perform a repellent action.
Example 23 - As in the previous examples, but in which the spray system is mounted on a spraying machine to facilitate the treatment of large areas.
Example 24 -As in previous examples, but in which the spray system is of any type in addition to the airless system, and is in any case able to guarantee regular coverage of the soil to be treated, the formation of a continuous film and dosage of the quantities applied.

## Claims

1. A system with aqueous, hydroalcoholic or acidulated water base which comprises at least one polysaccharide of natural origin with β-1,4-glucan structure selected from the group consisting of alginic acid, carrageenan, chitosan, hydroxyethylcellulose and a derivative thereof, and which furthermore comprises a mixture of plant fibers or particles coming from waste and a plasticizer with polyhydroxylated structure, said system being able to form a film once it has been sprayed on the soil.

2. The system with aqueous, hydroalcoholic or acidulated water base according to claim 1, wherein the plasticizer is from a renewable source.

3. The system as claimed in claim 1 or 2, wherein the formed film gels spontaneously, at least partly, either as a result of the formation of an interpenetrated structure or by capturing bi- or trivalent ions from the soil itself, or via the release of these ions by a component added to the solution itself.

4. The system as claimed in claim 1 or 2, wherein the polysaccharide is chosen from alginic acid, hydroxyethylcellulose and a combination thereof in a ratio of 1 to 5 and 5 to 1, dissolved in water at a total concentration of between 1 and 10%, preferably between 1.5 and 5%.

5. The system as claimed in claim 2, wherein the polysaccharide is chosen from carrageenan, hydroxyethylcellulose and a combination thereof in a ratio of 1 to 5 and 5 to 1, dissolved in water at a total concentration of between 1 and 10%, preferably between 1.5 and 5%.

6. The system as claimed in claim 1 or 2, wherein the polysaccharide is chosen from chitosan, hydroxyethylcellulose and a combination thereof in a ratio of 1 to 5 and 5 to 1, dissolved in water/acetic acid or in wine vinegar containing between 2 and 10% acetic acid, preferably between 2 and 5%.

7. The system as claimed in any one of the preceding claims wherein the plasticizer with polyhydroxylated structure is chosen from glycerol and a soluble derivative thereof such as polyglycerol, wherein the ratio between the polysaccharides and the plasticizer with polyhydroxylated structure is in the range 5:1 to 1:5, preferably 3:1 to 1:3.

8. The system as claimed in any one of the preceding claims which furthermore comprises a pigment, the quantity of which on the dry film is below 5%; said pigment can be of organic or mineral or synthetic nature.

9. The system as claimed in any one of the preceding claims, wherein the mixture of fibers is of marine or terrestrial origin, in a ratio of 1:5 to 5:1 on the polysaccharide, preferably 1:3 to 3:1.

10. The system as claimed in any one of the preceding claims which furthermore comprises humic substances coming from the composting of waste plant biomasses, in a quantity from 20 to 60% in weight with respect to the total weight of the dry residue.

11. The system as claimed in claim 10 , wherein the humic substances come from natural sources.

12. The system as claimed in claim 9 wherein said fiber comes from processing waste of fruit and vegetable or fish products or from processing waste of plant textile fibers, such as hemp, kenaf, cotton, broom, flax or processing waste from the paper industry, or from the composting thereof.

13. A method for soil mulching via spray application of a film that forms by evaporation of the system of the claims from 1 to 12 , said film being completely biodegradable and compostable.

14. The method as claimed in claim 13 , wherein said application is performed on soil in pots for the cultivation of vegetables, fruit, flowers or plants, either from seed or by transplanting production plants.

## Patentansprüche

1. System mit einer wässrigen, wässrig-alkoholischen oder gesäuerten Wasserbasis, welche wenigstens ein Polysaccharide eines natürlichen Ursprungs mit einer β-1,4-Glucan Struktur umfasst ausgesucht aus der Gruppe bestehend aus Alginsäure, Carrageen, Chitosan, Hydroxyethylcellulose und eines Derivats davon, und welches weiterhin umfasst eine Mischung von Pflanzenfasern oder Partikeln stammend von Abfall und einem Weichmacher mit polyhydroxylierter Struktur, wobei das System fähig ist einen Film zu bilden sobald es auf den Boden gesprüht wurde.

2. System mit wässrigen, wässrig-alkoholischen oder gesäuerten Wasserbasis nach Anspruch 1, wobei der Weichmacher von einer erneuerbaren Quelle stammt.

3. System wie in Anspruch 1 oder 2 beansprucht, wobei der gebildete Film zumindest teilweise spontan geliert, entweder als Resultat von der Bildung von einer durchdrungenen Struktur oder durch Einfangen bi- oder trivalenter Ionen aus dem Boden selbst, oder durch das Freisetzen von diesen Ionen durch eine selbst zu der Lösung zugefügten Komponente.

4. System wie in Anspruch 1 oder 2 beansprucht, wobei das Polysaccharide ausgesucht ist aus Alginsäure, Hydroxyethylcellulose und einer Kombination daraus in einem Verhältnis von 1 zu 5 und 5 zu 1, aufgelöst in Wasser in einer Gesamtkonzentration von zwischen 1 und 10 %, vorzugsweise zwischen 1,5 und 5 %.

5. System wie in Anspruch 2 beansprucht, wobei das Polysaccharide ausgesucht ist aus Carrageen, Hydroxyethylcellulose und einer Kombination daraus in einem Verhältnis von 1 zu 5 und 5 zu 1, aufgelöst in Wasser in einer Gesamtkonzentration von zwischen 1 und 10 %, vorzugsweise zwischen 1,5 und 5 %.

6. System wie in Anspruch 1 oder 2 beansprucht, wobei das Polysaccharide ausgesucht ist Chitosan, Hydroxyethylcellulose und einer Kombination daraus in einem Verhältnis von 1 zu 5 und 5 zu 1, aufgelöst in Wasser/Essigsäure oder in Weinessig enthaltend zwischen 2 und 10 % Essigsäure, vorzugsweise zwischen 2 und 5 %.

7. System wie in einem der vorherigen Ansprüche beansprucht, wobei der Weichmacher mit polyhydroxylierter Struktur ausgesucht ist aus Glyzerin und einem löslichen Derivat davon wie Polyglyzerin, wobei das Verhältnis zwischen Polysacchariden und dem Weichmacher mit polyhydroxylierter Struktur im Bereich 5:1 zu 1:5 ist, vorzugsweise 3:1 zu 1:3.

8. System wie in einem der vorherigen Ansprüche beansprucht, welches weiterhin ein Pigment umfasst, dessen Menge auf dem trockenen Film unter 5 % ist; wobei das Pigment aus einer organischen oder mineralischen oder synthetischen Art ist.

9. System wie in einem der vorherigen Ansprüche beansprucht, wobei die Mischung aus Fasern aus mariner oder terrestrischer Natur ist, in einem Verhältnis von 1:5 bis 5:1 auf dem Polysaccharid, vorzugsweise 1:3 zu 3:1.

10. System wie in einem der vorherigen Ansprüche beansprucht, welches weiterhin Huminstoffe stammend vom Kompostieren vom Abfall pflanzlicher Biomassen umfasst, in einer Menge von 20 bis 60 Gewichts-% im Vergleich zu der Gesamtmasse von dem Trockenrückstand.

11. System wie Anspruch 10 beansprucht, wobei die Huminstoffe aus natürlichen Quellen stammen.

12. System wie in Anspruch 9 beansprucht, wobei die Faser stammt von der Verarbeitung von Obst und Gemüse oder Fischprodukten oder von der Verarbeitung von Abfällen von Pflanzentextilfasern, wie Hanf, Kenaf, Baumwolle, Ginster, Flachs oder von der Verarbeitung von Abfällen aus der Papierindustrie, oder vom Kompostieren davon.

13. Verfahren zum Mulchen von Boden mittels Sprühauftrag von einem Film der durch Verdampfen von dem System aus den Ansprüchen von 1 bis 12 gebildet wird, wobei der Film vollständig biologisch abbaubar und kompostierbar ist.

14. Verfahren nach Anspruch 13, wobei das Auftragen ausgeführt wird auf Erde in Töpfen zum Anbau von Gemüse, Obst, Blumen oder Pflanzen, entweder von Samen oder durch Umpflanzen von Produktionspflanzen.

## Revendications

1. Système avec une base aqueuse, hydroalcoolique ou d'eau acidulée qui comprend au moins un polysaccharide d'origine naturelle de structure β-1,4-glucane choisi dans le groupe constitué de l'acide alginique, de la carraghénine, du chitosan, de l'hydroxyéthylcellulose et de l'un de leurs dérivés, et qui comprend en outre un mélange de fibres ou de particules végétales provenant des déchets et un plastifiant de structure polyhydroxylée, ledit système pouvant former un film une fois qu' il a été pulvérisé sur le sol.

2. Système avec une base aqueuse, hydroalcoolique ou d'eau acidulée selon la revendication 1, dans lequel le plastifiant provient d'une source renouvelable.

3. Système selon la revendication 1 ou 2, dans lequel le film formé se gélifie spontanément, au moins en partie, en raison de la formation d'une structure interpénétrée ou en capturant des ions bi- ou trivalents à partir du sol proprement dit, ou par l'intermédiaire de la libération de ces ions par un composant ajouté à la solution proprement dite.

4. Système selon la revendication 1 ou 2, dans lequel le polysaccharide est choisi parmi l'acide alginique, l'hydroxyéthylcellulose ou l'une de leurs combinaisons dans un rapport de 1 à 5 et de 5 à 1, dissous dans de l'eau à une concentration totale entre 1 et 10 %, de préférence entre 1,5 et 5 %.

5. Système selon la revendication 2, dans lequel le polysaccharide est choisi parmi la carraghénine, l'hydroxyéthylcellulose et l'une de leurs combinaisons dans un rapport de 1 à 5 et de 5 à 1, dissous dans de l'eau à une concentration totale entre 1 et 10 %, de préférence entre 1,5 et 5 %.

6. Système selon la revendication 1 ou 2, dans lequel le polysaccharide est choisi parmi le chitosan, l'hydroxyéthylcellulose et l'une de leurs combinaisons dans un rapport de 1 à 5 et de 5 à 1, dissous dans de l'eau/de l'acide acétique ou dans du vinaigre de vin contenant entre 2 et 10 % d'acide acétique, de préférence entre 2 et 5 %.

7. Système selon l'une quelconque des revendications précédentes, dans lequel le plastifiant de structure polyhydroxylée est choisi parmi le glycérol et l'un de ses dérivés solubles tels que le polyglycérol, dans lequel le rapport entre les polysaccharides et le plastifiant de structure polyhydroxylée est dans la plage de 5 : 1 à 1 : 5, de préférence de 3 : 1 à 1 : 3.

8. Système selon l'une quelconque des revendications précédentes, qui comprend en outre un pigment, dont la quantité sur le film sec est en dessous de 5 % ; ledit pigment pouvant être de nature organique ou minérale ou synthétique.

9. Système selon l'une quelconque des revendications précédentes, dans lequel le mélange des fibres est d'origine marine ou terrestre, dans un rapport de 1 : 5 à 5:1 1 sur le polysaccharide, de préférence de 1 : 3 à 3 : 1.

10. Système selon l'une quelconque des revendications précédentes, qui comprend en outre des substances humiques provenant du compostage de biomasses des déchets végétaux, dans une quantité de 20 à 60 % en poids par rapport au poids total de résidu sec.

11. Système selon la revendication 10, dans lequel les substances humiques proviennent de sources naturelles.

12. Système selon la revendication 9, dans lequel ladite fibre provient du traitement des déchets de fruits et de légumes ou de produits à base de poisson ou provient du traitement des déchets de fibres de textile végétales, telles que le chanvre, le kénaf, le coton, le genêt, le lin, ou du traitement des déchets provenant de l'industrie du papier, ou provenant de leur compostage.

13. Procédé de paillage du sol par l'intermédiaire de l'application au spray d'un film qui se forme par l'évaporation du système des revendications 1 à 12, ledit film étant complètement biodégradable et compostable.

14. Procédé selon la revendication 13, dans lequel ladite application est réalisée sur le sol dans des pots pour la culture de légumes, de fruits, de fleurs ou de plantes, soit à partir de graines, soit par la transplantation de plantes de production.
